# EUROPÄISCHE PATENTANMELDUNG

(11) **EP 0 854 080 A1**
(43) Veröffentlichungstag der Anmeldung: **22.07.1998**
(21) Anmeldenummer: 98100333.8
(22) Anmeldetag: 10.01.1998
(51) Int. Cl.: B62M 25/04, B62K 23/04

(54) **Rastenschalter für ein Fahrradgetriebe**

(30) Priorität: 14.01.1997 DE 19700885
(71) Anmelder: SRAM Deutschland GmbH, 97424 Schweinfurt (DE)
(72) Erfinder: Leiter, Berndt, 97534 Waigolshausen (DE); Johanni, Bernhard, Dipl.-Ing., 97464 Niederwerrn (DE); Rumpel, Max, 97440 Werneck (DE); König, Klaus, 97440 Mühlhausen (DE); Stühler, Klaus, 97453 Schonungen (DE); Arbeiter, Markus, Dipl.-Ing., 97070 Würzburg (DE)

(57) **Zusammenfassung**

Die Erfindung betrifft einen Rastenschalter für ein Fahrradgetriebe an einem Bauteil eines Fahrrades mit einem Gehäuse (1), einem Rastelement mit Rasten (7), welches mit einem drehbaren Handgriff verbunden ist und eine Wickeltrommel zur Betätigung eines Seilzuges aufweist. Das Gehäuse weist eine ringförmige Aussparung im Gehäuse auf, in der eine Rastfeder (3) angeordnet ist, die sich mit zwei Füßen (5) am Gehäuse abstützt und mit einer Rastnase mit dem Rastring zusammenwirkt. Im Gehäuse ist ein Gehäusevorsprung (8) angeordnet, mit welchem ein Fuß der Rastfeder zur Erzielung eines geringen Schaltspieles (12) festgelegt werden kann. Hierdurch werden geringe Schaltspiele, insbesondere zum Schalten von Getriebenaben bei Fahrrädern, möglich.

## Beschreibung

Die Erfindung betrifft einen Rastenschalter für ein Fahrradgetriebe gemäß dem Oberbegriff des Anspruches 1.

Mit der EP 676 325 A2 ist ein Rastenschalter bekannt geworden, der gemäß Fig. 1 von einem Stand der Technik mit einer Rastfeder zwischen einem feststehenden Gehäuse und einem drehbaren Rastring ausgeht. Die Rastfeder ist vorwiegend in einer ringförmigen Aussparung im Gehäuse angeordnet, die zwei Begrenzungsflächen aufweist, die mit der Rastfeder je nach Drehrichtung des drehbaren Rastringes in Berührung kommen. Diese Rastfeder wird über eine Rastnase mitgenommen, die in Rasten im Rastring eintaucht und an diesem mit Federkraft anliegt. Dadurch, daß die ringförmige Aussparung im Gehäuse eine geringfügig größere Erstreckung hat wie die Länge der Feder, so ergibt sich die Möglichkeit, daß die Feder in der ringförmigen Aussparung hin- und hergeschoben werden kann. Dieser Verschiebeweg ist gleichbedeutend mit einem Überschaltweg in einer Richtung, der insbesondere für das Schalten von Kettenschaltungen vom kleinen auf den nächstgrößeren Zahnkranz wahrgenommen wird.

Wird jedoch ein solcher Drehgriffschalter für die Betätigung eines Fahrradgetriebes, insbesondere einer Getriebenabe verwendet, so werden weit geringere Überschaltwege mit höherer Präzision erforderlich. Da die Rastfeder gemäß dem Stand der Technik in der EP 676 325 A2 wie auch die Rastfeder gemäß dem hier vorgeschlagenen Erfindungsgegenstand eine kleiderbügelähnliche Form besitzt, so wird deutlich, daß bei Einfedern während des Überfahrens eines Zwischenraumes zwischen zwei Rasten im Rastring sich die Länge der Feder verändert und somit auch der temporär verfügbare Überschaltweg. Will man also die Federlängung durch das Einfedern und somit einen Einfluß der Funktion auf Veränderungen des Überschaltweges ausschließen, so ist es erforderlich, die Anschläge für das Wandern der Feder an anderen Stellen als an beiden Enden der ringförmigen Aussparung anzubringen.

Es wird daher vorgeschlagen, die eine Begrenzungsfläche der ringförmigen Aussparung zum Anschlag der Feder zu benutzen und einen Gehäusevorsprung zwischen den Füßen unterhalb der Feder anzubringen, welcher mit einem der Füße einen zweiten Anschlag bildet. Es ergibt sich somit ein Schaltspiel, welches beliebig groß ausgelegt werden kann, und welches sich vor allen Dingen während des Schaltprozeßes nicht verändert.

Es ist daher die Aufgabe der Erfindung, eine Anordnung einer Rastfeder zwischen einem feststehenden Gehäuse eines Rastenschalters und einem drehbaren Rastring mit Rasten zu finden, bei welcher eine Überschaltweg ermöglicht wird, der unabhängig von den Bewegungen der Feder während eines Schaltvorgangs beim Einfedern konstant bleibt.

Die Lösung dieser Aufgabe ist in den Ansprüchen beschrieben.

Anhand zweier Teilschnittzeichnungen wird die Anordnung einer Rastfeder mit einem engen und konstanten Schaltspiel beschrieben.

Es zeigen:
- Fig. 1: einen Teilschnitt durch einen Rastenschalter mit einem Gehäuse, einer Rastfeder und einem drehbaren Rastring mit Überschaltweg;
- Fig. 2: einen Rastenschalter gemäß Fig. 1 mit einem Gehäusevorsprung als Anschlag für einen Fuß der Rastfeder.

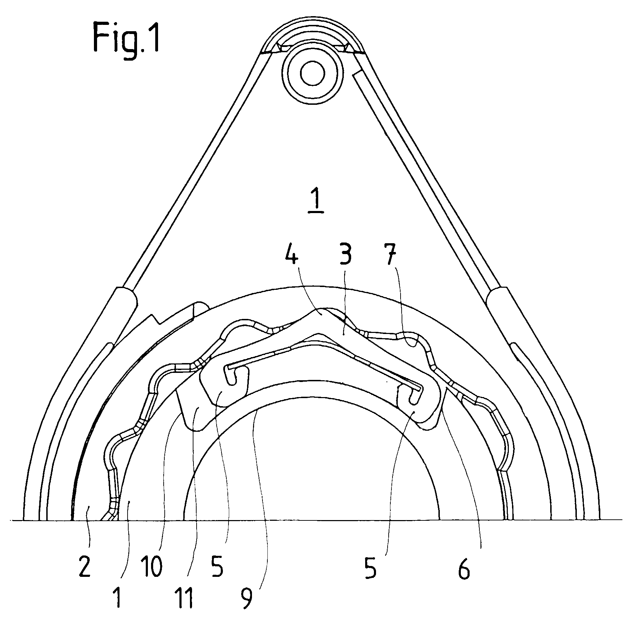

Ein Rastenschalter zur Betätigung eines Fahrradgetriebes besteht aus einem Gehäuse 1, welches an einem Bauteil eines Fahrrades, vorzugsweise an der Lenkstange, angeordnet ist und eine Rastfeder 3 aufweist, die in einer ringförmigen Aussparung mit einer ersten Begrenzungsfläche 6 und einer zweiten Begrenzungsfläche 10 angeordnet ist und zwei Füße 5 und eine Rastnase 4 aufweist, wobei die Füße 5 sich radial nach innen gegen das Gehäuse abstützen, während die Rastnase 4 nach radial außen gegen einen drehbaren Rastring 2 gepreßt wird, der an seinem inneren Umfang Rasten 7 aufweist, in die die Rastnase 4 bei Drehung des Rastringes 2 einrastet. Das Gehäuse 1 weist nach innen gerichtet einen Befestigungsdurchmesser 9 auf, der dem Durchmesser der Lenkstange eines Fahrrades entspricht und dort befestigt werden kann. Die Rastfeder 3 füllt in Umfangsrichtung die ringförmige Aussparung nicht ganz aus, weshalb ein Spalt 11 entsteht, der beim Hin- und Herschalten des drehbaren Rastringes einen Totgang ermöglicht, der insbesondere beim Schalten einer Kettenschaltung von einem Kettenrad auf eine daneben angeordnetes größeres Kettenrad die Möglichkeit bietet, diesen Schaltvorgang durch geringfügiges Überschalten zu beschleunigen, wobei nach Beendigung des Schaltvorganges durch Loslassen der Schalteinrichtung eine justierte Endlage der Schaltung zum Kettenrad wieder entsteht. Ein derartiger Überschaltweg ist bestimmbar als Längenunterschied der ringförmigen Aussparung im Gehäuse 1 gegenüber der Länge der Rastfeder 3. Wie schon vorher erwähnt, ist mit dem drehbaren Rastring 2 eine Wickeltrommel zum Aufwickeln eines Betätigungszuges für die Betätigung vom Fahrradgetrieben bzw. Kettenschaltungen verbunden. Die Beschreibung des Gegenstandes gemäß Fig. 1 stellt den heute bekannten Stand der Technik dar, der für die Betätigung von Kettenschaltungen ausreichend, jedoch für die Betätigung von Fahrradgetrieben, insbesondere Getriebenaben, nicht ausreicht.

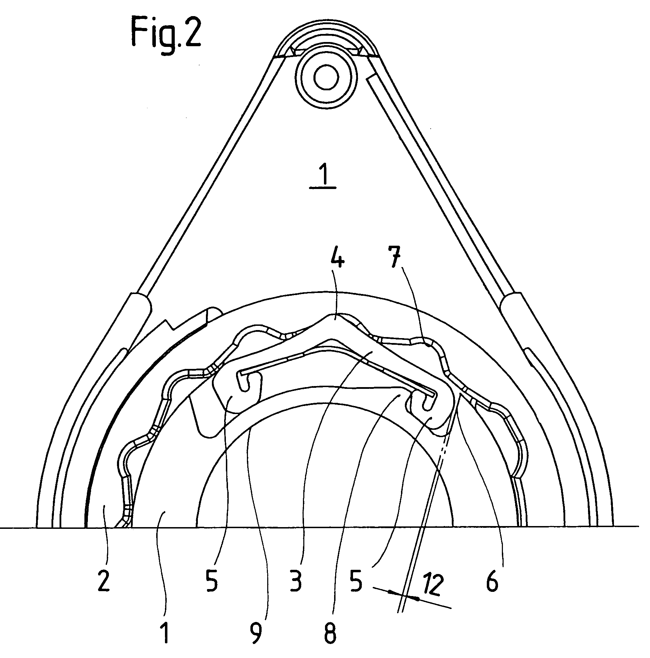

Gemäß Fig. 2 wird ein Rastenschalter mit einem Gehäusevorsprung 8 als Anschlag für einen der beiden Füße 5 der Rastfeder 3 vorgeschlagen, der die Verschiebung der Rastfeder 3 auf ein Schaltspiel 12 durch den Anschlag dieses Fußes 5 diesseits am Gehäusevorsprung 8 und jenseits an der ersten Begrenzungsfläche 6 definiert. Das Schaltspiel 12 kann beliebig groß gewählt werden, wobei die Größe des Schaltspiels 12 in etwa den Längenunterschieden in den Übertragungsteilen zwischen dem Rastenschalter und dem Fahrradgetriebe entspricht. Von Vorteil ist insbesondere die Konstanthaltung des Schaltspiels 12, unabhängig von den jeweils stattfindenden Einfederungen der Rastfeder 3 beim Überfahren der Vorsprünge zwischen den Rasten 7 im drehbaren Rastring 2.

Es ist ferner von Vorteil, die Rastfeder 3 einseitig an einem ihrer Füße 5 einzuspannen, da sich hieraus ein bei der Betätigung des drehbaren Rastrings 2 fühlbarer Drehmomentunterschied zwischen den beiden Betätigungsdrehrichtungen ergibt. Wird der Rastring 2 also in der Weise gedreht, daß der Kraftverlauf von der Rastnase 4 über die Feder 3 zur ersten Begrezgungsfläche 5 verläuft, so ist in dieser Drehrichtung das Betätigungsmoment größer als in der umgekehrten Richtung, wenn der drehbare Rastring 2 die Kraft über die Rastnase 4 der Rastfeder 3 über den Fuß 5 auf den Gehäusevorsprung 8 leitet. Da der Betätigungszug zum Schalten des Fahrradgetriebes unter Federspannung einer Feder im Schaltgetriebe steht, so wird der Schaltzug auf die Wickeltrommel des drehbaren Rastringes 2 in der Weise auflaufen, daß beim Einziehen des Betätigungszuges der Kraftverlauf vom drehbaren Rastring 2 über die Nase 4 der Rastfeder 3 über den Fuß 5 auf den Gehäusevorsprung 8 verläuft.

## Patentansprüche

1. Rastenschalter für ein Fahrradgetriebe, umfassend
* ein Gehäuse (1), welches eine Lenkstange eines Fahrrades umschließt und an dieser befestigbar ist;
* einen Rastring (2) mit Rasten (7), welcher drehbar im Gehäuse (1) gelagert ist und mit einem Betätigungszug zur Betätigung des Fahrradgetriebes versehen werden kann;
* eine Rastfeder (3) mit einer Rastnase (4) und Füßen (5),
* wobei die Rastfeder (3) zwischen dem Gehäuse (1) und dem Rastring (2) angeordnet ist und
* wobei die Rastfeder (3) in einer ringförmigen Aussparung im Gehäuse (1) zwischen einer ersten Begrenzungsfläche (6) und einer zweiten Begrenzungsfläche (10) angeordnet ist,
dadurch gekennzeichnet,
daß in der Aussparung des Gehäuses (1) zwischen den Füßen (5) der Rastfeder (3) ein Gehäusevorsprung (8) angeordnet ist, der gegenüber einem der Füße (5) der Rastfeder (3) einen Anschlag bildet und den möglichen Überschaltweg (11) auf eine definiertes Schaltspiel (12) durch einen gegenüberliegenden Anschlag am Fuß (5) an der ersten Begrenzungsfläche (6) begrenzt.

2. Rastenschalter nach Anspruch 1,
dadurch gekennzeichnet,
daß beim Einziehen des Betätigungszuges der Kraftverlauf vom drehbaren Rastring (2) über die Rastnase (4) der Rastfeder (3) über den Fuß (5) auf den Gehäusevorsprung (8) verläuft.
